(19) Europäisches Patentamt
European Patent Office
Office européen des brevets

(11) **EP 4 270 855 A1**

(12) **DEMANDE DE BREVET EUROPEEN**

(43) Date de publication:
**01.11.2023 Bulletin 2023/44**

(51) Classification Internationale des Brevets (IPC):
***H04L 9/00*** *(2022.01)*

(21) Numéro de dépôt: **23167211.4**

(52) Classification Coopérative des Brevets (CPC):
**H04L 9/003**

(22) Date de dépôt: **07.04.2023**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **25.04.2022 FR 2203809**

(71) Demandeur: **Commissariat à l'énergie atomique et aux énergies alternatives**
**75015 Paris (FR)**

(72) Inventeur: **BELLEVILLE, Nicolas**
**38054 GRENOBLE (FR)**

(74) Mandataire: **Brevalex**
**Tour Trinity**
**1 B Place de la Défense**
**92400 Courbevoie (FR)**

(54) **PROTECTION CONTRE LES ATTAQUES PAR CANAL AUXILIAIRE A L AIDE D'UN MASQUAGE CARRE**

(57) La présente invention concerne un procédé (100) pour protéger un dispositif électronique contre des attaques par canal auxiliaire. Le dispositif électronique est configuré pour exécuter un algorithme cryptographique comprenant des opérations dans un corps fini binaire $GF(2^n)$, $n$ étant un entier positif. L'algorithme utilise au moins une variable secrète s à protéger. Le procédé comporte :
- une détermination (101) d'une variable aléatoire k,
- un calcul (102) d'une représentation masquée $M(s,k)$ de la variable secrète s à l'aide d'une fonction de masquage M comportant une élévation à la puissance $2^k$,
- pour chaque opération impliquant une variable sensible v correspondant à la variable secrète s ou à un résultat intermédiaire obtenu à partir de la variable secrète s, une exécution (103) de l'opération à partir d'une représentation masquée $M(v,k')$ de la variable sensible v,
- une détermination (104) d'une variable de sortie r à partir d'un résultat final obtenu sous la forme d'une représentation masquée $M(r,k'')$.

Fig. 3

## Description

### Domaine technique

La présente invention concerne un procédé pour protéger un dispositif électronique contre des attaques par canal auxiliaire. L'invention a également pour objet un dispositif électronique implémentant un tel procédé.

### Etat de la technique antérieure

Il existe aujourd'hui de nombreux dispositifs électroniques comportant un processeur configuré pour exécuter un algorithme cryptographique. Un algorithme cryptographique utilise généralement au moins une variable secrète qu'il convient de dissimuler, par exemple une clé de chiffrement. Un tel dispositif électronique correspond par exemple à une carte à puce, un composant cryptographique (par exemple un circuit intégré de type microcontrôleur), ou un appareil électronique comportant un composant cryptographique (ordinateur, téléphone portable, carte de paiement, dispositif de création de signature électronique, etc.).

Les algorithmes cryptographiques considérés dans la présente demande utilisent une clé secrète pour calculer une information de sortie à partir d'une information d'entrée. Il peut s'agir par exemple d'une procédure de chiffrement, de déchiffrement, d'authentification, de signature ou de vérification de signature. Cela concerne les algorithmes cryptographiques symétriques (algorithmes à clé secrète) mais aussi les algorithmes cryptographiques asymétrique (algorithmes qui utilisent une clé secrète et une clé publique), et les algorithmes cryptographiques post-quantiques. Le chiffrement AES (acronyme anglais de « Advanced Encryption Standard », en français « norme de chiffrement avancé ») est un exemple d'algorithme cryptographique symétrique. Il est aujourd'hui considéré comme relativement sûr et utilisé dans de nombreuses applications (par exemple dans le chiffrement de certaines applications de communication, le chiffrement de disque dur ou le chiffrement des communications Wi-Fi). Le chiffrement RSA (nommé ainsi par les initiales de ses trois inventeurs) est un exemple d'algorithme cryptographique asymétrique. Il est très utilisé dans le commerce électronique et pour échanger des données confidentielles sur Internet. Le chiffrement de McEliece est un autre exemple d'algorithme cryptographique asymétrique.

Ces algorithmes sont construits de tel sorte qu'il n'est en pratique pas possible de découvrir la clé secrète uniquement à partir de l'information d'entrée et de l'information de sortie.

Les opérations exécutées par le processeur du dispositif électronique pour mettre en oeuvre l'algorithme cryptographique engendrent des variations de certaines grandeurs physiques telles que la consommation électrique, le rayonnement électromagnétique, la température, l'intensité acoustique ou la durée d'exécution. Ces variations sont dépendantes des données utilisées dans les différentes opérations. Plus particulièrement, dans la mesure où certaines opérations de l'algorithme impliquent la clé secrète, les variations observées peuvent présenter une corrélation avec la valeur de la clé secrète. Une personne malintentionnée peut alors effectuer des mesures d'une ou plusieurs grandeurs physiques, puis exploiter ces mesures par analyse statistique afin d'obtenir des informations sur la clé secrète utilisée par l'algorithme.

Ce type d'attaque est connu sous le nom d' « attaque par canal auxiliaire » (SCA pour l'acronyme anglais « Side-Channel Attack »). Plusieurs types d'attaques par canal auxiliaire sont connus, par exemple les attaques de type DPA (acronyme anglais pour « Differencial Power Analysis »), « attaque par modèle » (« Template Attack » en anglais), ou CPA (pour l'acronyme anglais « Correlation Power Analysis », en français « analyse de la puissance de corrélation »).

On définit généralement l'ordre d'une attaque par canal auxiliaire en fonction du nombre de variables que l'attaquant cherche à déterminer à partir des mesures observées. Par exemple, pour une attaque du premier ordre, l'attaquant s'intéresse uniquement à la valeur d'une variable à un instant donné. Pour une attaque du second ordre, l'attaquant s'intéresse à la valeur de deux variables différentes à deux instants donnés potentiellement différents. Il est généralement admis que la difficulté de mettre en oeuvre une attaque par canal auxiliaire augmente de façon exponentielle avec l'ordre de l'attaque.

Il est connu de protéger un dispositif électronique contre les attaques par canal auxiliaire en masquant les variables secrètes utilisées par l'algorithme cryptographique et en modifiant les opérations effectuées sur ces variables secrètes (ou sur des variables intermédiaires calculées à partir des variables secrètes) pour que les opérations portent sur des représentations masquées de ces variables et non plus directement sur les variables elles-mêmes. Il convient pour cela de modifier les opérations de l'algorithme pour les adapter à la technique de masquage utilisée.

Il existe différentes techniques de masquage. Le principe général du masquage est de faire la séparation d'une variable secrète en plusieurs parties (« shares » en anglais). Les opérations de l'algorithme sont alors effectuées sur les différentes parties de la variable secrète et non plus directement sur la variable secrète elle-même. Il est ensuite possible, grâce à la connaissance des valeurs des parties en lesquelles la variable secrète a été initialement séparée, de déterminer une valeur de sortie de l'algorithme à partir d'un résultat final des opérations de l'algorithme effectuées sur lesdites parties. Les différentes techniques de masquage partagent ce principe, mais utilisent différentes sortes de décomposition d'une variable secrète.

Un premier exemple est le masquage booléen, pour lequel une variable secrète s est séparée en une première partie $p_1$ déterminée de façon aléatoire et une deuxième partie $p_2$ définie de telle sorte que $s = p_1 \oplus p_2$. L'opérateur $\oplus$ correspond à l'addition dans un corps fini binaire, ce qui correspond également à l'opérateur « OU exclusif » bit à bit (opérateur « XOR »). La deuxième partie $p_2$ est donc définie par $p_2 = s \oplus p_1$ (car $s \oplus p_1 = p_1 \oplus p_1 \oplus p_2 = p_2$). Les parties $p_1$ et $p_2$ forment une représentation par masquage booléen de la variable secrète s.

Un deuxième exemple est le masquage multiplicatif, pour lequel une variable secrète s est séparée en une première partie $p_1$ non nulle déterminée de façon aléatoire et une deuxième partie $p_2$ définie telle que $s = p_1 \oplus p_2$. L'opérateur $\oplus$ correspond à la multiplication dans un corps fini binaire. La deuxième partie $p_2$ est alors définie par $p_2 = s \oplus (p_1{}^\wedge(-1))$. L'opérateur $^\wedge$ correspond à une puissance de corps fini binaire, et la relation $a \oplus (a^\wedge(-1)) = 1$ est vérifiée. Les parties $p_1$ et $p_2$ forment une représentation par masquage multiplicatif de la variable secrète s.

Un troisième exemple est le masquage affine, pour lequel une première partie $p_1$ non nulle et une deuxième partie $p_2$ sont déterminées de façon aléatoire et une troisième partie $p_3$ est déterminée comme suit : $p_3 = s \oplus p_1 \oplus p_2$. Il s'agit d'une combinaison entre le masquage booléen et le masquage multiplicatif.

Il est possible de séparer la variable secrète en un plus grand nombre de parties, en utilisant un plus grand nombre de masques aléatoires $p_1, p_2, ..., p_d$. Pour le masquage booléen on aurait alors $s = p_1 \oplus p_2 ... \oplus p_d$. Cette technique de masquage est d'ordre $d$. Une technique de masquage d'ordre d reste théoriquement vulnérable à une attaque par canal auxiliaire d'ordre $d + 1$.

Dans le cas du masquage booléen, les différentes parties des variables secrètes se propagent dans les opérations de l'algorithme de telle sorte que chaque variable intermédiaire soit indépendante de toute variable secrète. La valeur de chaque partie, considérée indépendamment des autres, est distribuée aléatoirement et reste indépendante de la valeur de la clé secrète. Par conséquent, une fuite sur une partie ne révèle aucune information sur la clé secrète. Cela rend ainsi une attaque par canal auxiliaire difficile à réaliser.

Dans le cas du masquage multiplicatif, l'indépendance statistique des différentes parties n'est pas parfaite car un secret égal à zéro implique nécessairement qu'une partie soit nulle. Toutefois, chaque variable intermédiaire n'apporte pas plus d'information sur la variable secrète que l'information déjà apportée par une partie de la variable secrète.

Le masquage booléen, le masquage multiplicatif et le masquage affine s'appliquent bien à certaines opérations (telles que les opérations booléennes, le décalage de bits et l'extension de signe pour le masquage booléen, la multiplication ou l'élévation à la puissance en tant qu'opérations de corps fini binaire pour le masquage multiplicatif). Elles ne sont cependant pas directement compatibles avec d'autres opérations (par exemple une addition modulaire, ou un accès à une table indexée par un secret).

D'autres techniques de masquage peuvent alors être exploitées pour effectuer ces opérations, comme par exemple le masquage arithmétique (qui exploite l'addition modulaire). Il est également envisageable de faire une interpolation polynomiale de l'opération à effectuer et de masquer l'évaluation du polynôme interpolateur. Il est également possible de tabuler l'opération et d'effectuer un masquage de la table. Lorsque l'algorithme cryptographique comporte différents types d'opérations qui ne sont compatibles qu'avec certaines techniques de masquage, il convient de faire des conversions d'un type de masquage vers un autre type de masquage.

A titre d'exemple, le brevet EP1068695B1 divulgue une protection contre les attaques auxiliaires par masquage booléen. Le brevet EP2302552B1 divulgue une protection par masquage affine. Le brevet EP3593483B1 divulgue un procédé de transition d'un masquage booléen vers un masquage affine. Le document « Secure Multiplicative Masking of Power Functions », L. GENELLE et al., divulgue une utilisation du masquage multiplicatif. Le document « Affine Masking against Higher-Order Side Channel Analysis », G. FUMAROLLI et al., propose de combiner le masquage booléen avec le masquage multiplicatif pour augmenter le niveau de sécurité. Le document « Fast Evaluation of Polynomials over Binary Finite Fields and Application to Side-Channel Countermeasures », J.S CORON et al., divulgue un procédé pour masquer des accès à une table constante indexée par un secret (par exemple une table de substitution « S-box » de l'algorithme AES) à l'aide d'une interpolation polynomiale de la table.

Le choix du type de masquage à utiliser peut être déterminé en fonction des opérations utilisées par l'algorithme cryptographique. Par exemple, le masquage booléen est particulièrement peu coûteux en termes de complexité calculatoire pour les opérations de type « rotation », alors que le masquage multiplicatif sera préféré pour des opérations de puissance.

Les performances du masquage booléen ne sont cependant pas toujours satisfaisantes, notamment s'il convient de se protéger contre des attaques d'ordre relativement élevé. En effet, la complexité calculatoire devient importante lorsque le nombre de parties en lesquelles une variable secrète doit être séparée est important. A titre d'exemple, l'utilisation du masquage booléen dans un algorithme AES divise par dix les performances de l'algorithme.

De plus, le masquage booléen résiste relativement mal aux fuites en transition. Il s'agit d'une fuite liée au changement d'une valeur à une autre. Ces transitions se modélisent par un « OU exclusif ». Ainsi, lorsqu'une transition apparait entre les deux parties de la décomposition d'une variable sensible en masquage booléen, elle dévoile la variable sensible.

Il convient donc de trouver de nouvelles solutions de protection contre les attaques par canal auxiliaire afin d'obtenir un compromis intéressant entre performance et sécurité.

**Exposé de l'invention**

La présente invention a pour objectif de remédier à tout ou partie des inconvénients de l'art antérieur.

A cet effet, et selon un premier aspect, il est proposé par la présente invention, un procédé pour protéger un dispositif électronique contre des attaques par canal auxiliaire. Le dispositif électronique comporte un processeur configuré pour exécuter un algorithme cryptographique comprenant des opérations sur des éléments appartenant à un corps fini binaire $GF(2^n)$, $n$ étant un entier positif. Une partie au moins desdites opérations impliquent au moins une variable secrète s à protéger. Le procédé est mis en oeuvre par le processeur du dispositif électronique et il comporte :

- une détermination d'une variable aléatoire $k$,
- un calcul d'une représentation masquée $M(s, k)$ de ladite variable secrète $s$ à l'aide d'une fonction de masquage $M$ comportant une élévation à la puissance $2\string^k$, l'opérateur $\string^$ correspondant à une puissance de corps fini binaire,
- pour chaque opération impliquant une variable sensible $v$ correspondant à ladite variable secrète $s$ ou à un résultat intermédiaire obtenu à partir de ladite variable secrète $s$, une exécution de ladite opération à partir d'une représentation masquée $M(v, k')$ de ladite variable sensible $v$,
- une détermination d'une variable de sortie $r$ de l'algorithme cryptographique à partir d'un résultat final obtenu sous la forme d'une représentation masquée $M(r, k'')$,

les variables $k'$ et $k''$ étant déterminées à partir de la variable $k$.

De telles dispositions permettent d'obtenir un masquage particulièrement performant pour les opérations d'addition, de multiplication et de puissance en tant qu'opérations de corps fini binaire grâce au comportement linéaire de ces opérations vis-à-vis d'une exponentiation à une puissance de deux (élévation à la puissance d'une puissance de deux). En outre, le masquage obtenu est robuste contre les fuites en transition.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, la fonction de masquage $M$ est une fonction dite de « masquage carré » telle que, pour une variable p prédéterminée :

[Math.1]

$$\forall\, x \in GF(2^n), M(x, p) = x\string^(2\string^p)$$

Dans des modes particuliers de mise en oeuvre, lorsque ladite opération impliquant la variable sensible $v$ correspond à une addition de corps fini binaire impliquant une autre variable $w$, l'exécution de ladite opération comprend un calcul d'une représentation $M(w, k')$ par masquage carré de ladite autre variable $w$, et un calcul d'une addition de corps fini binaire entre $M(v, k')$ et $M(w, k')$.

Dans des modes particuliers de mise en oeuvre, lorsque ladite opération impliquant la variable sensible $v$ correspond à une multiplication de corps fini binaire impliquant une autre variable $z$, l'exécution de ladite opération comprend un calcul d'une représentation $M(z, k')$ par masquage carré de ladite autre variable $z$, et un calcul d'une multiplication de corps fini binaire entre $M(v, k')$ et $M(z, k')$.

Dans des modes particuliers de mise en oeuvre, pour au moins une opération impliquant une variable sensible $v$, l'exécution de ladite opération comprend :

- une conversion de la représentation par masquage carré de ladite variable sensible vers un autre masquage, dit « masquage de conversion »,
- une exécution de ladite opération en utilisant une représentation par le masquage de conversion de la variable sensible,
- une conversion d'un résultat de ladite opération du masquage de conversion vers le masquage carré.

Dans des modes particuliers de mise en oeuvre, le masquage de conversion est un masquage booléen. La conversion de la représentation par masquage carré $M(v, k')$ de la variable sensible $v$ vers une représentation par masquage booléen comporte alors :

- une détermination d'une variable aléatoire $v_0$,

- un calcul d'une variable $v_1$ telle que $v_1 = (v_0\char`\^(2\char`\^k') \oplus M(v, k'))\char`\^(2\char`\^(-k'))$, l'opérateur $\oplus$ correspondant à une addition de corps fini binaire,
- les variables $v_0$ et $v_1$ forment une représentation par masquage booléen sur laquelle l'opération est exécutée afin d'obtenir un résultat sous la forme d'une représentation par masquage booléen prenant la forme de deux variables $r_0$ et $r_1$, et la conversion du résultat obtenu vers le masquage carré comporte le calcul d'une représentation par masquage carré sous la forme $r_0\char`\^(2\char`\^k') \oplus r_1\char`\^(2\char`\^k') = (r_0 \oplus r_1)\char`\^(2\char`\^k')$.

Dans des modes particuliers de mise en oeuvre, le masquage de conversion est un masquage multiplicatif. La conversion de la représentation par masquage carré $M(v, k')$ de la variable sensible $v$ vers une représentation par masquage multiplicatif comporte alors :

- une détermination d'une variable aléatoire $v_0$ non nulle,
- un calcul d'une variable $v_1$ telle que $v_1 = v_0\char`\^(2\char`\^k') \oplus M(v, k'))\char`\^(2\char`\^(-k'))$, l'opérateur $\oplus$ correspondant à une multiplication de corps fini binaire,
- les variables $v_0$ et $v_1$ forment une représentation par masquage multiplicatif sur laquelle l'opération est exécutée afin d'obtenir un résultat sous la forme d'une représentation par masquage multiplicatif prenant la forme de deux variables $r_0$ et $r_1$, et la conversion du résultat obtenu vers le masquage carré comporte le calcul d'une représentation par masquage carré sous la forme $r_0\char`\^(-(2\char`\^k')) \oplus r_1\char`\^(2\char`\^k')$.

Dans des modes particuliers de mise en oeuvre, pour au moins une opération impliquant une variable sensible, l'exécution de ladite opération comprend une interpolation polynomiale de ladite opération et un calcul d'une représentation par masquage carré d'une évaluation dudit polynôme interpolateur.

Dans des modes particuliers de mise en oeuvre, la fonction de masquage $M$ est une fonction combinant un masquage carré et un masquage booléen, la fonction de masquage $M$ étant définie, pour deux variables $p$ et $a$ prédéterminées, selon l'une des expressions suivantes :

[Math.2]

$$\forall\, x \in GF(2^n), M(x, p, a) = x\char`\^(2\char`\^p) \oplus a,$$

$$\forall\, x \in GF(2^n), M(x, p, a) = (x \oplus a)\char`\^(2\char`\^p).$$

Dans des modes particuliers de mise en oeuvre, la fonction de masquage $M$ est une fonction combinant un masquage carré et un masquage multiplicatif, la fonction de masquage $M$ étant définie, pour une variable $m$ non nulle et une variable $p$ prédéterminées, selon l'une des expressions suivantes :

[Math.3]

$$\forall\, x \in GF(2^n), M(x, p, m) = x\char`\^(2\char`\^p) \otimes m,$$

$$\forall\, x \in GF(2^n), M(x, p, m) = (x \otimes m)\char`\^(2\char`\^p),$$

$m$ étant une variable aléatoire non nulle.

Dans des modes particuliers de mise en oeuvre, la fonction de masquage $M$ est une fonction combinant un masquage carré et un masquage affine, la fonction de masquage $M$ étant définie, pour une variable $m$ non nulle et deux variables $p$ et $a$ prédéterminées, selon l'une des expressions suivantes :

[Math.4]

$$\forall\, x \in GF(2^n),\ M(x,p,m,a) = (x \otimes m \oplus a)^\wedge(2^\wedge p),$$

$$\forall\, x \in GF(2^n),\ M(x,p,m,a) = (x \otimes m)^\wedge(2^\wedge p) \oplus a,$$

$$\forall\, x \in GF(2^n),\ M(x,p,m,a) = m \otimes x^\wedge(2^\wedge p) \oplus a,$$

$$\forall\, x \in GF(2^n),\ M(x,p,m,a) = m \otimes (x^\wedge(2^\wedge p) \oplus a),$$

$$\forall\, x \in GF(2^n),\ M(x,p,m,a) = m \otimes (x \oplus a)^\wedge(2^\wedge p),$$

$$\forall\, x \in GF(2^n),\ M(x,p,m,a) = (m \otimes (x \oplus a))^\wedge(2^\wedge p).$$

Selon un deuxième aspect, la présente invention concerne un produit programme d'ordinateur pour l'exécution d'un algorithme cryptographique. Le programme comprend des instructions de code qui, lorsqu'elles sont exécutées par un processeur d'un dispositif électronique, configurent ledit processeur pour exécuter un procédé selon l'un quelconque des modes de mise en oeuvre précédents.

Selon un troisième aspect, la présente invention concerne un dispositif électronique comprenant une mémoire mémorisant un tel produit programme d'ordinateur, et un processeur configuré pour l'exécuter.

Selon un quatrième aspect, la présente invention concerne un procédé pour protéger un dispositif électronique contre des attaques par canal auxiliaire. Le dispositif électronique comporte un processeur configuré pour exécuter des instructions de code d'un algorithme cryptographique comprenant des opérations sur des éléments appartenant à un corps fini binaire $GF(2^n)$, $n$ étant un entier positif. Une partie au moins desdites opérations impliquent au moins une variable secrète $s$ à protéger. Le procédé comporte une modification desdites instructions de code par un outil informatique de conversion automatique de code. La modification desdites instructions de code comporte :

- un ajout d'une détermination d'une variable aléatoire $k$,
- un ajout d'un calcul d'une représentation masquée $M(s,k)$ de ladite variable secrète s à l'aide d'une fonction de masquage $M$ comportant une élévation à la puissance $2^\wedge k$, l'opérateur $\wedge$ correspondant à une puissance de corps fini binaire,
- une transformation de chaque opération impliquant une variable sensible $v$ correspondant à ladite variable secrète s ou à un résultat intermédiaire obtenu à partir de ladite variable secrète $s$, de sorte que ladite opération soit effectuée à partir d'une représentation masquée $M(v,k')$ de ladite variable sensible $v$,
- un ajout d'une détermination d'une variable de sortie $r$ de l'algorithme cryptographique à partir d'un résultat final obtenu sous la forme d'une représentation masquée $M(r, k'')$,

les variables $k'$ et $k''$ étant déterminées à partir de la variable $k$.

Selon un cinquième aspect, la présente invention concerne un produit programme d'ordinateur pour un outil informatique de conversion automatique de code d'un algorithme cryptographique. Le programme comprend des instructions de code qui, lorsqu'elles sont exécutées par un processeur, configurent ledit processeur pour modifier des instructions de code de l'algorithme cryptographique selon un procédé selon le mode de mise en oeuvre décrit ci-avant.

**Brève description des dessins**

D'autres caractéristiques et avantages de l'invention apparaîtront à la lecture d'un mode de réalisation préférentiel de l'invention, décrit en référence aux figures jointes parmi lesquelles :

La figure 1 représente de manière schématique un dispositif électronique configuré pour exécuter un algorithme cryptographique.

La figure 2 illustre de manière schématique la mise en oeuvre d'un algorithme cryptographique dans un cas où les opérations exécutées par l'algorithme ne sont pas protégées contre des attaques par canal auxiliaire.

La figure 3 représente de manière schématique un procédé selon l'invention pour protéger la mise en oeuvre d'un algorithme cryptographique contre des attaques par canal auxiliaire.

La figure 4 représente de manière schématique un procédé pour convertir automatiquement des instructions de code d'un algorithme cryptographique dans le but de protéger sa mise en oeuvre contre des attaques par canal auxiliaire.

La figure 5 illustre un exemple de conversion des instructions de code d'un algorithme cryptographique dans le but de protéger sa mise en oeuvre contre des attaques par canal auxiliaire.

**Exposé détaillé de modes de réalisation particuliers**

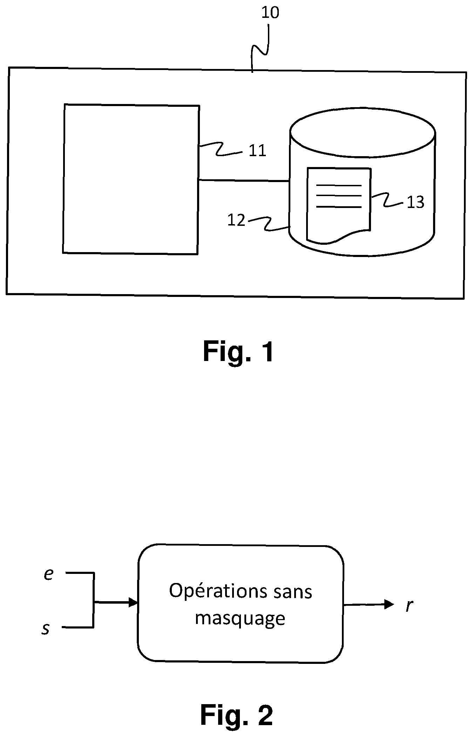

La figure 1 décrit de manière schématique un dispositif électronique 10 comportant un processeur 11 configuré pour exécuter un algorithme cryptographique. Le processeur 11 est configuré par des instructions de code 13 sauvegardées dans une mémoire 12 du dispositif électronique 10. Les instructions de code 13 forment un programme d'ordinateur (ou programme informatique) qui met en oeuvre l'algorithme cryptographique.

Le dispositif électronique 10 correspond par exemple à une carte à puce, un composant cryptographique (par exemple un circuit intégré de type microcontrôleur), ou un appareil électronique comportant un composant cryptographique (ordinateur, téléphone portable, carte de paiement, dispositif de création de signature électronique, etc.).

L'algorithme cryptographique utilise au moins une variable secrète s pour calculer une information de sortie correspondant à une variable de sortie r à partir d'une information d'entrée correspondant à une variable d'entrée e. La figure 2 illustre schématiquement un tel algorithme cryptographique dans un cas où les opérations exécutées par l'algorithme ne sont pas protégées contre des attaques par canal auxiliaire (dans ce cas les opérations sont exécutées directement sur la variable secrète s, laissant alors la possibilité à une personne malveillante d'obtenir des informations sur la variable secrète s en utilisant une attaque par canal auxiliaire).

L'algorithme cryptographique comprend des opérations sur des éléments appartenant à un corps fini binaire $GF(2^n)$, $n$ étant un entier positif. L'algorithme cryptographique peut notamment comporter des opérations de corps fini binaire impliquant la variable secrète s ou des variables intermédiaires obtenues à partir de la variable secrète s. Dans la présente demande, l'opérateur $\oplus$ correspond à une addition de corps fini binaire, c'est-à-dire un « OU exclusif » bit à bit ; l'opérateur $\oplus$ correspond à une multiplication de corps fini binaire ; l'opérateur $\wedge$ correspond à une puissance de corps fini binaire ; les opérateurs + et - correspondent respectivement à l'addition et à la soustraction modulaires, par exemple modulo $2^n$ pour rester dans $GF(2^n)$.

A titre d'exemple nullement limitatif, l'algorithme cryptographique considéré peut correspondre à tout ou partie d'un algorithme cryptographique symétrique ou asymétrique tel qu'AES, RSA ou McEliece.

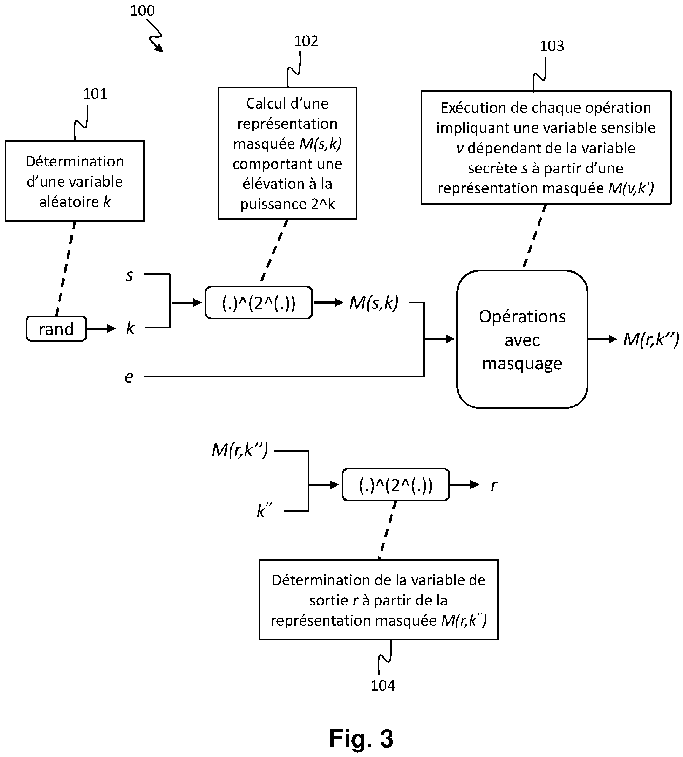

La figure 3 représente schématiquement un procédé 100 d'exécution de l'algorithme cryptographique en utilisant un masquage particulier pour protéger le dispositif électronique 10 contre des attaques par canal auxiliaire. Le procédé 100 est mis en oeuvre par les instructions de code 13.

Le procédé 100 comporte notamment une détermination 101 d'une variable aléatoire $k$ et le calcul 102 d'une représentation masquée $M(s,k)$ de la variable secrète s. Tel qu'illustré sur la figure 3, la fonction de masquage $M$ comporte une élévation à la puissance d'une puissance de deux. Plus particulièrement, la détermination 101 de la représentation masquée $M(s,k)$ de la variable secrète $s$ comporte une élévation à la puissance $2^{\wedge}k$. L'élévation à la puissance $2^{\wedge}k$ peut être opérée directement sur la variable secrète s ou sur une opération impliquant la variable secrète $s$.

Pour chaque opération impliquant la variable secrète $s$, l'opération est exécutée à partir de la représentation masquée $M(s,k)$ de la variable secrète $s$, et non pas directement à partir de la variable secrète $s$. Une variable intermédiaire obtenue à partir d'une opération impliquant la représentation masquée $M(s, k)$ de la variable secrète $s$ est également obtenue sous la forme d'une représentation masquée. Les opérations ultérieures qui portent sur cette variable intermédiaire sont à leur tour exécutées en prenant en compte sa représentation sous forme masquée.

Ainsi, pour chaque opération impliquant une variable sensible v correspondant à la variable secrète s ou à un résultat intermédiaire obtenu à partir de ladite variable secrète $s$, le procédé 100 comporte l'exécution 103 de ladite opération à partir d'une représentation masquée $M(v, k')$ de la variable sensible $v$. La variable $k'$ peut être égale à la variable $k$, mais elle peut aussi, comme cela sera détaillé ultérieurement, prendre une autre valeur définie à partir de la variable $k$. En effet, et de façon optionnelle, la valeur de l'exposant utilisé pour le masquage peut changer au cours des opérations (par exemple si une opération correspond à une élévation à la puissance d'une puissance de deux, ou si on procède à un changement de masque en tirant une nouvelle variable aléatoire pour définir la valeur de l'exposant).

Enfin, le procédé 100 comporte une détermination 104 d'une variable de sortie r de l'algorithme cryptographique à partir d'un résultat final obtenu sous la forme d'une représentation masquée $M(r, k'')$. Là encore, la variable $k''$ peut être égale à la variable $k,$ mais elle peut également prendre une autre valeur déterminée à partir de la variable $k$ et en fonction des différentes opérations qui ont été exécutées. La variable de sortie r est par exemple obtenue à partir de la représentation masquée $M(r, k'')$ en effectuant une élévation à la puissance $2^{\wedge}(-k'')$.

Les étapes 101 à 104 sont effectuées à chaque exécution de l'algorithme cryptographique. Cela signifie qu'à chaque nouvelle exécution de l'algorithme cryptographique, une nouvelle valeur est déterminée de façon aléatoire pour la variable $k$.

Avec de telles dispositions, les variables utilisées dans les opérations mettant en oeuvre l'algorithme cryptographique révèlent bien moins d'information sur la variable secrète. Une attaque par canal auxiliaire visant à obtenir la valeur de la variable secrète est alors difficile à réaliser.

L'invention repose notamment sur le fait que, dans un corps fini binaire, pour une variable p prédéterminée, les relations suivantes sont vérifiées :

[Math.5]

$$\forall (a, b \in GF(2^n)), (a \oplus b)\text{^}(2\text{^}p) = a\text{^}(2\text{^}p) \oplus b\text{^}(2\text{^}p)$$

[Math.6]

$$\forall (a, b \in GF(2^n)), (a \otimes b)\text{^}(2\text{^}p) = a\text{^}(2\text{^}p) \otimes b\text{^}(2\text{^}p)$$

[Math.7]

$$\forall (a, b \in GF(2^n)), (a\text{^}b)\text{^}(2\text{^}p) = (a\text{^}(2\text{^}p))\text{^}b$$

L'exposant correspondant à la variable *p* est un entier positif. Cet exposant peut notamment appartenir à $GF(2^n)$. L'exposant sera toutefois généralement choisi parmi les entiers compris dans l'intervalle $[\![ 1, n - 1 ]\!]$ car dans $GF(2^n)$, élever à la puissance $(2\text{^}p)$ est équivalent à élever à la puissance $(2\text{^}(p \% n))$ (l'opérateur % correspondant à l'opérateur « modulo »).

Dans un mode particulier de réalisation, la fonction de masquage *M(x, p)* est une fonction dite de « masquage carré » définie de telle sorte que, pour une variable *p* prédéterminée, on a :

[Math.1]

$$\forall x \in GF(2^n), M(x, p) = x\text{^}(2\text{^}p).$$

Considérons, à titre d'exemple nullement limitatif, qu'en l'absence de masquage, les opérations de l'algorithme cryptographique correspondent aux opérations suivantes :

[Math.8]

$$v_1 = e \oplus i$$

[Math.9]

$$v_2 = s \oplus v_1$$

[Math.10]

$$v_3 = v_2 \otimes m$$

[Math.11]

$$r = v_3\text{^}(2\text{^}j)$$

La variable *s* est une variable secrète ; la variable *e* est une variable publique correspondant à une information d'entrée ; la variable *r* correspond à une information de sortie. Les variables *i* et *j* sont des variables publiques.

Pour se protéger contre une attaque par canal auxiliaire, il convient d'exécuter ces opérations de telle façon qu'elles n'utilisent pas directement la variable secrète *s* ou une variable intermédiaire sensible obtenue à partir de la variable secrète *s.*

L'opération [Math.8] n'implique pas la variable secrète *s.* L'opération [Math.8] n'implique pas non plus de variable intermédiaire obtenue à partir de la variable secrète *s.* Il n'est donc pas nécessaire de modifier cette opération car elle ne manipule pas de variable sensible.

En revanche, l'opération [Math.9] implique la variable secrète s. Il convient donc d'utiliser la représentation par masquage carré $M(s,k)$ de la variable secrète *s* pour exécuter cette opération. Une représentation par masquage carré $M(v_1,k)$ de la variable $v_1$ est également calculée. L'opération $\oplus$ est alors exécutée entre les représentations par masquage carré des variables *s* et $v_1$. En s'appuyant sur la relation [Math.5], on peut constater que le résultat obtenu est alors la représentation par masquage carré $M(v_2, k)$ de la variable $v_2$ :

[Math.12]

$$M(v_2, k) = v_2{}^\wedge(2^\wedge k) = (s \oplus v_1)^\wedge(2^\wedge k) = (s^\wedge(2^\wedge k)) \oplus (v_1{}^\wedge(2^\wedge k))$$
$$= M(s, k) \oplus M(v_1, k)$$

L'opération [Math.10] implique la variable intermédiaire $v_2$ qui a été obtenue à partir de la variable secrète *s*. La variable $v_2$ est donc une variable sensible qu'il convient de protéger contre une attaque par canal auxiliaire. Il convient donc d'utiliser la représentation par masquage carré de la variable $v_2$. La représentation par masquage carré de la variable $v_2$ correspond au résultat de l'opération [Math.9]. Il convient également de calculer une représentation par masquage carré $M(m, k)$ de la variable *m.* L'opération $\oplus$ est alors exécutée entre les représentations par masquage carré des variables *m* et $v_2$. En s'appuyant sur la relation [Math.6], on peut constater que le résultat obtenu est alors une représentation par masquage carré $M(v_3,k)$ de la variable $v_3$ :

[Math.13]

$$M(v_3, k) = v_3{}^\wedge(2^\wedge k) = (v_2 \otimes m)^\wedge(2^\wedge k) = (v_2{}^\wedge(2^\wedge k)) \otimes (m^\wedge(2^\wedge k))$$
$$= M(v_2, k) \otimes M(m, k)$$

L'opération [Math.11] implique la variable intermédiaire $v_3$ qui a été obtenue à partir de la variable sensible $v_2$, elle-même obtenue à partir de la variable secrète *s*. La variable $v_3$ est donc une variable sensible qu'il convient de protéger contre une attaque par canal auxiliaire. Il convient donc d'utiliser la représentation par masquage carré de la variable $v_3$. La représentation par masquage carré de la variable $v_3$ correspond au résultat de l'opération [Math.10]. L'opération d'élévation à la puissance $(2^\wedge j)$ est alors exécutée sur la représentation par masquage carré de la variable $v_3$. En s'appuyant sur la relation [Math.7], on peut constater que le résultat obtenu est alors une représentation par masquage carré $M(r,k)$ de la variable *r* :

[Math.14]

$$M(r, k) = r^\wedge(2^\wedge k) = (v_3{}^\wedge(2^\wedge j))^\wedge(2^\wedge k) = (v_3{}^\wedge(2^\wedge k))^\wedge(2^\wedge j) = M(v_3, k)^\wedge(2^\wedge j)$$

Il est alors possible de déterminer l'information de sortie de l'algorithme cryptographique correspondant à la variable *r* à partir de la représentation par masquage carré $M(r, k)$ de la variable *r* et à partir de la variable *k :*

[Math.15]

$$r = M(r,k)^\wedge(2^\wedge(-k))$$

Il convient de noter que la valeur de l'exposant utilisé dans la représentation par masquage carré peut varier au cours des opérations.

Par exemple, pour exécuter l'opération [Math.11], il aurait été envisageable de procéder à un changement de la valeur de l'exposant de la fonction de masquage carré plutôt que d'exécuter une élévation à la puissance $(2^\wedge j)$. La nouvelle valeur de l'exposant de la fonction de masquage carré est alors $(2^\wedge k')$ avec $k' = k + j$ . En effet :

[Math.16]

$$(v_3{}^{\wedge}(2^{\wedge}k))^{\wedge}(2^{\wedge}j) = v_3{}^{\wedge}(2^{\wedge}(k+j)) = M(v_3, k+j) = M(v_3, k')$$

Il est également envisageable de procéder à un changement de masquage carré à différentes étapes de l'algorithme cryptographique en changeant de façon aléatoire la valeur de l'exposant de la fonction de masquage carré. De telles dispositions permettent d'accroître encore davantage la protection contre les attaques par canal auxiliaire. Il est par exemple possible de déterminer une variable aléatoire $k''$ et de définir une nouvelle représentation par masquage carré $M(v,k'')$ d'une représentation par masquage carré $M(v, k)$ en calculant :

[Math.17]

$$M(v, k'') = M(v, k)^{\wedge}(2^{\wedge}(k'' - k))$$

Il convient également de noter que l'algorithme cryptographique peut utiliser plusieurs variables secrètes. Dans ce cas, une représentation masquée doit être calculée pour chaque variable secrète. Chaque valeur masquée peut éventuellement être masquée avec une valeur d'exposant différente. Considérons par exemple qu'une représentation par masquage carré $M(s_1, k_1)$ est calculée pour masquer une première variable secrète $s_1$ et qu'une représentation par masquage carré $M(s_2, k_2)$ est calculée pour une masquer une deuxième variable secrète $s_2$ ; $k_1$ et $k_2$ étant deux variables aléatoires différentes. Dans, ce cas, il convient d'effectuer un changement de masquage carré lorsqu'une opération implique les deux variables $s_1$ et $s_2$, ou lorsqu'une opération implique deux variables obtenues chacune respectivement à partir des variables $s_1$ et $s_2$.

Supposons, à titre d'exemple nullement limitatif, qu'en l'absence de masquage, l'algorithme cryptographique comporte les opérations suivantes :

[Math.18]

$$v_1 = e \oplus s_1$$

[Math.19]

$$v_2 = v_1 \oplus s_2$$

L'opération [Math.18] implique la variable secrète $s_1$. Il convient donc d'utiliser la représentation par masquage carré $M(s_1, k_1)$ de la variable secrète $s_1$ pour exécuter cette opération. Il convient également de calculer une représentation par masquage carré de la variable $e$. L'opération $\oplus$ est alors exécutée entre les représentations par masquage carré des variables $e$ et $s_1$. Le résultat obtenu est alors la représentation par masquage carré $M(v_1, k)$ de la variable $v_1$ :

[Math.20]

$$M(v_1, k_1) = v_1{}^{\wedge}(2^{\wedge}k_1) = (e \oplus s_1)^{\wedge}(2^{\wedge}k_1) = (e^{\wedge}(2^{\wedge}k_1)) \oplus (s_1{}^{\wedge}(2^{\wedge}k_1))$$
$$= M(e, k_1) \oplus M(s_1, k_1)$$

L'opération [Math.19] implique la variable secrète $s_2$ et la variable $v_1$ obtenue à partir de la variable secrète $s_1$. Il convient alors, dans un premier temps, de procéder à un changement de masquage carré pour l'une au moins des variables $s_2$ et $v_1$ de telle sorte qu'elles présentent chacune une représentation par masquage carré utilisant le même exposant. Par exemple, la représentation par masquage carré $M(v_1, k_2)$ est calculée pour la variable secrète $v_1$ :

[Math.21]

$$M(v_1, k_2) = M(v_1, k_1)^{\wedge}(2^{\wedge}(k_2 - k_1))$$

Il convient ensuite d'exécuter l'opération $\oplus$ entre les représentations par masquage carré des variables $s_2$ et $v_1$ qui sont basées sur la même valeur d'exposant ($2^{\wedge}k_2$). Le résultat obtenu est alors la représentation par masquage carré $M(v_2, k_2)$ de la variable $v_2$ :

[Math.22]

$$M(v_2, k_2) = v_2{}^{\wedge}(2^{\wedge}k_2) = (v_1 \oplus s_2){}^{\wedge}(2^{\wedge}k_2) = (v_1{}^{\wedge}(2^{\wedge}k_2)) \oplus (s_2{}^{\wedge}(2^{\wedge}k_2))$$

$$= M(v_1, k_2) \oplus M(s_2, k_2)$$

Nous avons considéré jusque-là les opérations d'addition, de multiplication et de puissance en tant qu'opérations de corps fini binaire. Ces opérations sont particulièrement bien adaptées au masquage carré car elles présentent un comportement linéaire vis-à-vis d'une élévation à la puissance d'une puissance de deux (voir les relations [Math.5] à [Math.7]). L'algorithme cryptographique peut toutefois comporter d'autres opérations qui ne sont pas nécessairement bien adaptées au masquage carré. C'est par exemple le cas pour un décalage de bits, une extension de signe, pour les opérations booléennes « ET » et « OU », ou pour un accès à une table indexée par un secret.

Dans un tel cas, il est possible de procéder à une conversion temporaire du masquage carré vers un masquage d'un autre type, dit « masquage de conversion ». Il peut s'agir par exemple d'un masquage booléen, d'un masquage multiplicatif, d'un masquage affine, ou d'un masquage arithmétique. Une fois que l'opération a été exécutée en utilisant le masquage de conversion, une conversion inverse est appliquée pour revenir au masquage carré.

Considérons, à titre d'exemple nullement limitatif, qu'en l'absence de masquage, l'algorithme cryptographique comporte les opérations suivantes :

[Math.23]

$$v_1 = e \oplus s$$

[Math.24]

$$v_2 = shiftleft(v_1, 3)$$

[Math.25]

$$v_3 = v_2 \oplus a$$

La variable $e$ correspond à une information publique d'entrée ; la variable $s$ correspond à une clé secrète ; la variable $a$ est publique. Une représentation par masquage carré $M(s,k)$ est calculée pour masquer la variable secrète $s$.

Pour exécuter l'opération [Math.23], une représentation par masquage carré $M(e,k)$ est calculée pour la variable secrète $e$, et l'opération $\oplus$ est effectuée entre les représentations par masquage carré des variables e et s. Le résultat obtenu est alors la représentation par masquage carré $M(v_1,k)$ de la variable $v_1$ :

[Math.26]

$$M(v_1, k) = v_1{}^{\wedge}(2^{\wedge}k) = (e \oplus s){}^{\wedge}(2^{\wedge}k) = (e^{\wedge}(2^{\wedge}k)) \oplus s^{\wedge}(2^{\wedge}k))$$

$$= M(e, k) \oplus M(s, k)$$

L'opération [Math.24] correspond à un décalage à gauche de trois bits de la variable $v_1$. Pour exécuter cette opération de façon masquée, on peut par exemple effectuer une conversion vers un masquage booléen. En effet, l'opération de décalage de bits est une opération qui s'effectue relativement facilement sous forme de masquage booléen.

Pour passer à une représentation sous forme de masquage booléen à partir d'une représentation sous forme de masquage carré $M(v_1,k)$, il convient de déterminer de façon aléatoire deux variables $v_1'$ et $v_1''$ telles que $v_1 = v_1' \oplus v_1''$. Dans ce but, la variable $v_1'$ est déterminée de façon aléatoire et la variable $v_1''$ est définie de telle sorte que :

[Math.27]

$$v_1'' = (v_1'{}^\wedge(2^\wedge k) \oplus M(v_1,k))^\wedge(2^\wedge(-k))$$

Les variables $v_1'$ et $v_1''$ forment alors les deux parties de la représentation par masquage booléen de la variable $v_1$. L'opération de décalage à gauche peut alors être effectuée de façon conventionnelle sur la représentation par masquage booléen de la variable $v_1$.

Le résultat obtenu en sortie de l'opération de décalage à gauche est une représentation par masquage booléen prenant la forme de deux variables $r_1'$ et $r_1''$. Pour repasser à une représentation sous forme de masquage carré, il convient de déterminer une représentation par masquage carré $M(v_2,k)$ de la variable $v_2$ telle que :

[Math.28]

$$M(v_2,k) = r_1'{}^\wedge(2^\wedge k) \oplus r_1''{}^\wedge(2^\wedge k) = (r_1' \oplus r_1'')^\wedge(2^\wedge k)$$

Pour exécuter l'opération [Math.25], une représentation par masquage carré $M(a,k)$ est calculée pour la variable secrète $a$, et l'opération $\oplus$ est effectuée entre les représentations par masquage carré des variables $a$ et $v_2$. Le résultat obtenu est alors la représentation par masquage carré $M(v_3, k)$ de la variable $v_3$ :

[Math.29]

$$M(v_3,k) = v_3{}^\wedge(2^\wedge k) = (v_2 \oplus a)^\wedge(2^\wedge k) = (v_2{}^\wedge(2^\wedge k)) \oplus a^\wedge(2^\wedge k))$$
$$= M(v_2,k) \oplus M(a,k)$$

Pour exécuter certaines opérations, il est également envisageable d'effectuer une conversion vers un masquage multiplicatif.

Pour passer d'une représentation par masquage carré $M(v,p)$ d'une variable $v$ à une représentation sous forme de masquage multiplicatif, il convient de déterminer de façon aléatoire deux variables $v'$ et $v''$ telles que $v'' = v' \oplus v$. Dans ce but, la variable $v'$ est déterminée de façon aléatoire et la variable $v''$ est définie de telle sorte que :

[Math.30]

$$v'' = (v'{}^\wedge(2^\wedge p) \otimes M(v,p))^\wedge(2^\wedge(-p))$$

Les variables $v'$ et $v''$ forment alors les deux parties de la représentation par masquage multiplicatif de la variable $v$. L'opération considérée peut alors être effectuée de façon conventionnelle sur la représentation par masquage multiplicatif de la variable $v$.

Le résultat obtenu est une représentation par masquage multiplicatif prenant la forme de deux variables $r'$ et $r''$. Pour repasser à une représentation sous forme de masquage carré, il convient de déterminer une représentation par masquage carré $M(r,p)$ telle que :

[Math.31]

$$M(r,p) = r'^{\wedge}(-(2^{\wedge}p)) \otimes r''^{\wedge}(2^{\wedge}p)$$

Pour exécuter certaines opérations, il est également envisageable d'effectuer une conversion vers un masquage affine.

Pour passer d'une représentation par masquage carré $M(v,p)$ d'une variable $v$ à une représentation par masquage affine, il convient de déterminer de manière aléatoire trois variables $v'$, $v''$, et $v'''$ telles que $v''' = v' \oplus v \oplus v''$. Dans ce but, les variables $v'$ et $v''$ sont déterminées de manière aléatoire, et la variable $v'''$ est définie de telle sorte que :

[Math.32]

$$v''' = (v'^{\wedge}(2^{\wedge}p) \otimes M(v,p) \oplus v''^{\wedge}(2^{\wedge}p))^{\wedge}(2^{\wedge}(-p))$$

Les variables $v'$, $v''$ et $v'''$ forment alors les trois parties de la représentation par masquage affine de la variable $v$. L'opération considérée peut alors être effectuée de façon conventionnelle sur la représentation par masquage affine de la variable v.

Le résultat obtenu est une représentation par masquage affine prenant la forme de trois variables $r'$,$r''$,$r'''$ telles que $r''' = r' \oplus r \oplus r''$. Pour repasser à une représentation par masquage carré, il convient de déterminer une représentation par masquage carré $M(r,p)$ telle que :

[Math.33]

$$M(r,p) = (r'''^{\wedge}(2^{\wedge}p) \oplus r''^{\wedge}(2^{\wedge}p)) \otimes r'^{\wedge}(-(2^{\wedge}p))$$

Pour exécuter certaines opérations, il est également envisageable d'effectuer une conversion vers un masquage arithmétique. La conversion du masquage carré vers le masquage arithmétique peut s'effectuer en effectuant une première conversion vers le masquage booléen, puis une deuxième conversion du masquage booléen vers le masquage arithmétique. Inversement, la conversion inverse depuis le masquage arithmétique vers le masquage carré peut s'effectuer en effectuant une première conversion du masquage arithmétique vers le masquage booléen, puis une deuxième conversion du masquage booléen vers le masquage carré. La conversion du masquage booléen vers le masquage arithmétique et la conversion du masquage arithmétique vers le masquage booléen sont connues de l'homme du métier (voir par exemple le document « *A Sound Method for Switching between Boolean and Arithmetic Masking* », L. GOUBIN).

Pour exécuter certaines opérations, plutôt que de recourir à une conversion de masquage, il est également envisageable d'effectuer une interpolation polynomiale de l'opération et un calcul d'une représentation par masquage carré du polynôme interpolateur.

Enfin, pour exécuter certaines opérations, il est aussi possible de tabuler l'opération et de masquer la table, de façon analogue à ce qui est fait conventionnellement en masquage booléen (voir par exemple le document « *Higher Order Masking of Look-Up Tables* », J.S. CORON).

Pour augmenter le niveau de sécurité, le masquage carré peut être combiné avec d'autre types de masquage, par exemple avec un masquage booléen, un masquage multiplicatif ou un masquage affine.

Dans des modes particuliers de mise en oeuvre, la fonction de masquage $M$ est une fonction combinant un masquage carré et un masquage booléen. La fonction de masquage $M$ peut alors être définie par l'une des expressions suivantes ($a$ et $p$ étant des variables prédéterminées tirées aléatoirement) :

[Math.2]

$$\forall\, x \in GF(2^n), M(x,p,a) = x^{\wedge}(2^{\wedge}p) \oplus a,$$

$$\forall\, x \in GF(2^n), M(x,p,a) = (x \oplus a)^{\wedge}(2^{\wedge}p).$$

Dans des modes particuliers de mise en oeuvre, la fonction de masquage $M$ est une fonction combinant un masquage carré et un masquage multiplicatif. La fonction de masquage $M$ peut alors être définie par l'une des expressions suivantes ($m$ et $p$ étant des variables prédéterminées tirées aléatoirement, $m$ étant une variable non nulle) :

[Math.3]

$$\forall\, x \in GF(2^n), M(x,p,m) = x^\wedge(2^\wedge p) \otimes m,$$

$$\forall\, x \in GF(2^n), M(x,p,m) = (x \otimes m)^\wedge(2^\wedge p).$$

Dans des modes particuliers de mise en oeuvre, la fonction de masquage $M$ est une fonction combinant un masquage carré et un masquage affine. La fonction de masquage $M$ peut alors être définie par l'une des expressions suivantes ($a$, $m$ et $p$ étant des variables prédéterminées tirées aléatoirement, m étant une variable non nulle) :

[Math.4]

$$\forall\, x \in GF(2^n), M(x,p,m,a) = (x \otimes m \oplus a)^\wedge(2^\wedge p),$$

$$\forall\, x \in GF(2^n), M(x,p,m,a) = (x \otimes m)^\wedge(2^\wedge p) \oplus a,$$

$$\forall\, x \in GF(2^n), M(x,p,m,a) = m \otimes x^\wedge(2^\wedge p) \oplus a,$$

$$\forall\, x \in GF(2^n), M(x,p,m,a) = m \otimes (x^\wedge(2^\wedge p) \oplus a),$$

$$\forall\, x \in GF(2^n), M(x,p,m,a) = m \otimes (x \oplus a)^\wedge(2^\wedge p),$$

$$\forall\, x \in GF(2^n), M(x,p,m,a) = (m \otimes (x \oplus a))^\wedge(2^\wedge p).$$

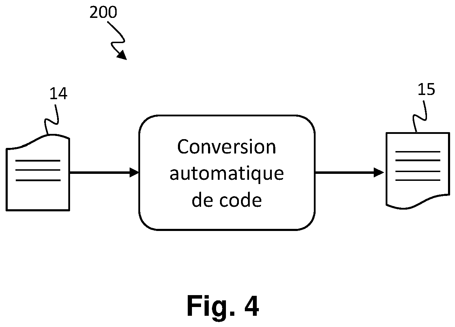

Tel qu'illustré sur la figure 4, la présente invention concerne aussi un procédé 200 pour convertir automatiquement des instructions de code 14 d'un algorithme cryptographique dans le but de protéger sa mise en oeuvre contre des attaques par canal auxiliaire.

Sur la figure 4, les instructions de code 14 correspondent à une mise en oeuvre de l'algorithme cryptographique qui n'est pas protégée contre les attaques par canal auxiliaire. Les instructions de code 15 obtenue en sortie du procédé 200 correspondent à une mise en oeuvre de l'algorithme cryptographique qui est protégée contre les attaques par canal auxiliaire.

Le procédé 200 est mis en oeuvre par un outil informatique de conversion automatique de code. L'objectif du procédé 200 est de modifier les instructions de code 14 pour obtenir de nouvelles instructions de code 15 qui protègent la mise en oeuvre de l'algorithme cryptographique contre les attaques par canal auxiliaire. La protection repose sur la fonction de masquage M décrite précédemment (fonction de masquage M qui comporte une élévation à la puissance d'une puissance de deux dont l'exposant est tiré aléatoirement).

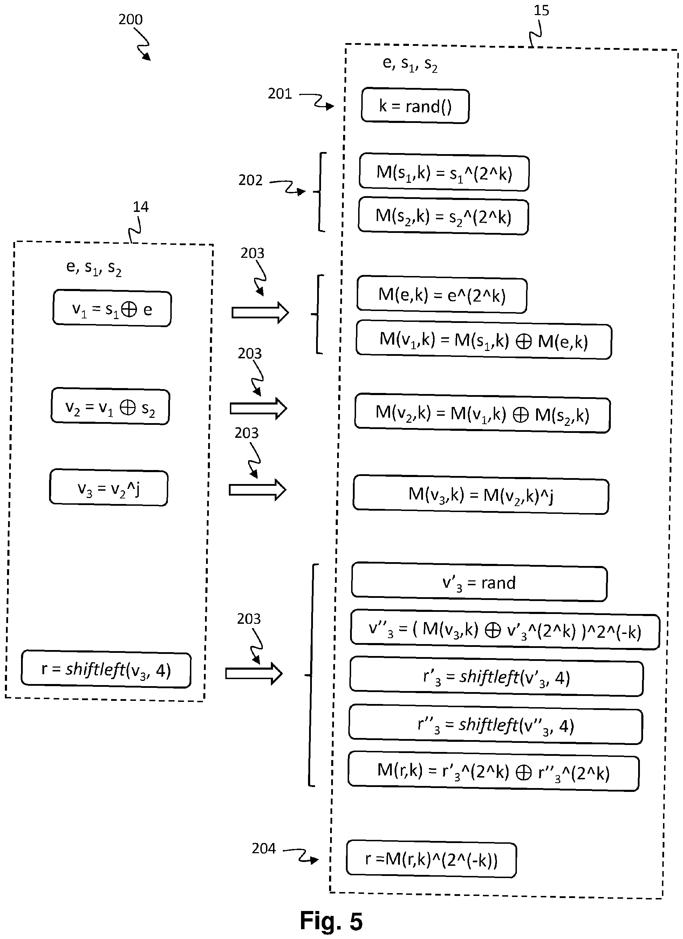

La figure 5 donne un exemple illustratif et nullement limitatif de la mise en oeuvre du procédé 200 pour convertir des instructions de code 14 d'un algorithme cryptographique dans le but de protéger sa mise en oeuvre contre des attaques par canal auxiliaire.

Dans l'exemple considéré et illustré à la figure 5, l'algorithme cryptographique utilise deux variables secrètes $s_1$ et $s_2$. Il convient toutefois de noter que l'invention s'applique également à des situations dans lesquelles l'algorithme cryptographique n'utilise qu'une seule variable secrète, ou un nombre de variables secrètes supérieur à deux. La variable e est une variable publique correspondant à une information d'entrée ; la variable i est aussi une variable publique.

Le procédé 200 comporte l'ajout 201 d'une détermination d'une variable aléatoire $k$ et l'ajout 202 d'un calcul d'une représentation masquée $M(s_1, k)$ et $M(s_2, k)$ respectivement pour chacune des variables secrètes $s_1$ et $s_2$.

Dans l'exemple considéré, la fonction de masquage $M(x,k)$ est une fonction de masquage carré définie de telle sorte que $M(x,k) = x^\wedge(2^\wedge k)$. Il convient toutefois de noter que, dans des variantes, une fonction de masquage combinant un masquage carré avec un autre type de masquage pourrait également être utilisée (par exemple une combinaison du masquage carré avec un masquage booléen, un masquage multiplicatif ou un masquage affine, comme cela a été décrit précédemment).

Il convient également de noter que, dans l'exemple considéré, la même variable aléatoire $k$ est utilisée pour calculer les représentations par masquage carré des variables $s_1$ et $s_2$. Rien n'empêcherait toutefois, dans des variantes, et tel que cela a été décrit précédemment, de tirer deux variables aléatoires différentes pour calculer les représentations par masquage carré des variables $s_1$ et $s_2$.

Le procédé 200 comporte également une transformation 203 de chaque opération impliquant une variable sensible correspondant à une variable secrète ou à un résultat intermédiaire obtenu à partir d'une variable secrète, de sorte que ladite opération soit effectuée à partir d'une représentation masquée de ladite variable sensible.

Par exemple, lorsqu'une opération correspond à une addition de corps fini binaire entre deux variables dont l'une au moins est une variable sensible (c'est le cas par exemple de l'opération $v_1 = s_1 \oplus e$ et de l'opération $v_2 = v_1 \oplus s_2$ illustrées sur la figure 5), alors l'instruction de code correspondante est transformée pour que l'opération soit effectuée entre les représentations par masquage carré des deux variables. Il convient d'ajouter le calcul de la représentation par masquage carré d'une variable impliquée dans cette opération si cette variable n'est pas déjà disponible sous la forme d'une représentation par masquage carré (c'est le cas pour la variable e dans l'exemple illustré sur la figure 5).

Il en irait de même pour une opération correspondant à une multiplication de corps fini binaire entre deux variables dont l'une au moins est une variable sensible : l'instruction de code correspondante serait transformée pour que l'opération soit effectuée entre les représentations par masquage carré des deux variables (il conviendrait là aussi d'ajouter le calcul de la représentation par masquage carré d'une variable qui ne serait pas déjà disponible sous la forme d'une représentation par masquage carré).

Lorsqu'une opération correspond à une élévation d'une variable sensible à une puissance (comme c'est le cas pour l'opération $v_3 = v_2{}^\wedge j$ illustrée sur la figure 5), l'instruction de code correspondante est transformée pour que l'opération soit effectuée sur la représentation par masquage carré de la variable plutôt que sur la variable elle-même.

Lorsqu'une opération implique une variable sensible et que cette opération n'est pas facilement transposable pour une représentation par masquage carré (par exemple l'opération de décalage de bits vers la gauche *shiftleft*($v_3$, 4) illustrée sur la figure 5, alors l'instruction de code correspondante est transformée en une pluralité d'instructions de code pour effectuer successivement une conversion de la représentation par masquage carré vers un masquage de conversion (par exemple un masquage booléen, comme c'est le cas sur l'exemple illustré à la figure 5), une exécution de l'opération en utilisant la représentation par le masquage de conversion, puis une conversion du résultat de l'opération du masquage de conversion vers le masquage carré.

Enfin, le procédé 200 comporte l'ajout 204 d'une détermination d'une variable de sortie r de l'algorithme cryptographique à partir d'un résultat final obtenu sous la forme de la représentation masquée $M(r,k)$. Dans l'exemple considéré et illustré à la figure 5, il suffit d'élever $M(r,k)$ à la puissance $2^{\wedge}(-k)$ pour obtenir la variable de sortie r.

Il convient de noter que, dans un souci de simplification, l'exemple illustré à la figure 5 ne comporte qu'un petit nombre d'opérations. Les opérations et les instructions de code permettant de mettre en oeuvre ces opérations peuvent toutefois être significativement plus nombreuses.

Aussi, et comme cela a été décrit précédemment, la valeur de l'exposant utilisé pour le masquage carré peut varier au cours des opérations, par exemple si on procède à des changements de la valeur de l'exposant du masquage carré à différentes étapes de l'algorithme pour renforcer encore davantage le niveau de sécurité, ou lorsqu'une opération correspond à une élévation à la puissance d'une puissance de deux).

Le masquage carré est particulièrement bien adapté pour l'addition, la multiplication et la puissance de corps fini binaire. En effet, le surcoût en termes de complexité calculatoire pour protéger ces opérations par masquage carré est relativement faible. En effet, une fois que le masquage des variables secrètes est effectué, le surcoût pour chacune de ces opérations correspond au maximum au calcul d'une puissance.

A titre de comparaison, pour la multiplication et la puissance de corps fini binaire, le masquage booléen est nettement plus coûteux que le masquage carré.

Les inventeurs ont fait des mesures du temps d'exécution d'un algorithme AES. Sur une implémentation sans utilisation de tables masquées, le temps d'exécution d'un AES est multiplié par 11,54 pour un masquage booléen, et par 4,84 pour un masquage carré. Sur une implémentation utilisant des tables masquées, le temps d'exécution d'un AES est multiplié par 6,24 pour un masquage booléen, et par 1,30 pour un masquage carré. Le masquage carré est donc significativement plus performant que le masquage booléen lorsqu'il est appliqué à un algorithme AES.

En outre, le masquage carré fournit une protection très satisfaisante contre les attaques par canal auxiliaire. En particulier, le masquage carré présente une bonne résistance contre les fuites en transition. En effet, les fuites en transition se modélisent par un « OU exclusif » entre deux variables. Dans le cas du masquage carré, le « OU exclusif » de deux variables masquées produit un résultat masqué également, grâce à la linéarité de l'opération de puissance de deux par rapport au « OU exclusif ».

Le masquage carré fournit donc un compromis intéressant en termes de sécurité et de performance pour certains algorithmes cryptographiques, et notamment pour les algorithmes qui utilisent abondamment les opérations d'addition, de multiplication et de puissance de corps fini binaire.

**Revendications**

1.  Procédé (100) pour protéger un dispositif électronique (10) contre des attaques par canal auxiliaire, ledit dispositif électronique (10) comportant un processeur (11) configuré pour exécuter un algorithme cryptographique comprenant des opérations sur des éléments appartenant à un corps fini binaire $GF(2^n)$, n étant un entier positif, une partie au moins desdites opérations impliquant au moins une variable secrète s à protéger, le procédé étant mis en oeuvre par le processeur (11) du dispositif électronique (10), ledit procédé (100) étant **caractérisé en ce qu'**il comporte :

- une détermination (101) d'une variable aléatoire $k$,
- un calcul (102) d'une représentation masquée $M(s,k)$ de ladite variable secrète $s$ à l'aide d'une fonction de masquage $M$ comportant une élévation à la puissance $2\char`\^k$, l'opérateur $\char`\^$ correspondant à une puissance de corps fini binaire,
- pour chaque opération impliquant une variable sensible $v$ correspondant à ladite variable secrète s ou à un résultat intermédiaire obtenu à partir de ladite variable secrète $s$, une exécution (103) de ladite opération à partir d'une représentation masquée $M(v, k')$ de ladite variable sensible $v$,
- une détermination (104) d'une variable de sortie $r$ de l'algorithme cryptographique à partir d'un résultat final obtenu sous la forme d'une représentation masquée $M(r,k'')$,

les variables $k'$ et $k''$ étant déterminées à partir de la variable $k$.

2. Procédé (100) selon la revendication 1 dans lequel la fonction de masquage $M$ est une fonction dite de « masquage carré » telle que, pour une variable $p$ prédéterminée :

$$\forall\, x \in GF(2^n), M(x,p) = x^\char`\^(2^\char`\^p).$$

3. Procédé (100) selon la revendication 2 dans lequel, lorsque ladite opération impliquant la variable sensible $v$ correspond à une addition de corps fini binaire impliquant une autre variable $w$, l'exécution (103) de ladite opération comprend :

- un calcul d'une représentation $M(w,k')$ par masquage carré de ladite autre variable $w$,
- un calcul d'une addition de corps fini binaire entre $M(v, k')$ et $M(w, k')$.

4. Procédé (100) selon l'une quelconque des revendications 2 à 3 dans lequel, lorsque ladite opération impliquant la variable sensible $v$ correspond à une multiplication de corps fini binaire impliquant une autre variable $z$, l'exécution (103) de ladite opération comprend :

- un calcul d'une représentation par masquage carré $M(z,k')$ de ladite autre variable z,
- un calcul d'une multiplication de corps fini binaire entre $M(v,k')$ et $M(z,k')$.

5. Procédé (100) selon l'une quelconque des revendications 2 à 4 dans lequel, pour au moins une opération impliquant une variable sensible $v$, l'exécution (103) de ladite opération comprend :

- une conversion de la représentation par masquage carré de ladite variable sensible vers un autre masquage, dit « masquage de conversion »,
- une exécution de ladite opération en utilisant une représentation par le masquage de conversion de la variable sensible,
- une conversion d'un résultat de ladite opération du masquage de conversion vers le masquage carré.

6. Procédé (100) selon la revendication 5 dans lequel le masquage de conversion est un masquage booléen, la conversion de la représentation par masquage carré $M(v, k')$ de la variable sensible $v$ vers une représentation par masquage booléen comporte :

- une détermination d'une variable aléatoire $v_0$,
- un calcul d'une variable $v_1$ telle que $v_1 = (v_0\char`\^(2\char`\^k') \oplus v\char`\^(2\char`\^k'))\char`\^(2\char`\^(-k'))$, l'opérateur $\oplus$ correspondant à une addition de corps fini binaire,

les variables $v_0$ et $v_1$ forment une représentation par masquage booléen sur laquelle l'opération est exécutée afin d'obtenir un résultat sous la forme d'une représentation par masquage booléen prenant la forme de deux variables $r_0$ et $r_1$, et la conversion du résultat obtenu vers le masquage carré comporte le calcul d'une représentation par masquage carré sous la forme $r_0\char`\^(2\char`\^k') \oplus r_1\char`\^(2\char`\^k') = (r_1 \oplus r_2)\char`\^(2\char`\^k')$.

7. Procédé (100) selon la revendication 5 dans lequel le masquage de conversion est un masquage multiplicatif, la conversion de la représentation par masquage carré $M(v, k')$ de la variable sensible $v$ vers une représentation par masquage multiplicatif comporte :

- une détermination d'une variable aléatoire $v_0$ non nulle,
- un calcul d'une variable $v_1$ telle que $v_1 = (v_0{}^{\wedge}(2^{\wedge}k') \oplus v^{\wedge}(2^{\wedge}k'))^{\wedge}(2^{\wedge}(-k'))$, l'opérateur $\oplus$ correspondant à une multiplication de corps fini binaire,

les variables $v_0$ et $v_1$ forment une représentation par masquage multiplicatif sur laquelle l'opération est exécutée afin d'obtenir un résultat sous la forme d'une représentation par masquage multiplicatif prenant la forme de deux variables $r_0$ et $r_1$, et la conversion du résultat obtenu vers le masquage carré comporte le calcul d'une représentation par masquage carré sous la forme $r_0{}^{\wedge}(-(2^{\wedge}k')) \oplus r_1{}^{\wedge}(2^{\wedge}k')$.

8.  Procédé (100) selon l'une quelconque des revendications 2 à 7 dans lequel, pour au moins une opération impliquant une variable sensible, l'exécution (103) de ladite opération comprend une interpolation polynomiale de ladite opération et un calcul d'une représentation par masquage carré d'une évaluation dudit polynôme interpolateur.

9.  Procédé (100) selon la revendication 1 dans lequel la fonction de masquage $M$ est une fonction combinant un masquage carré et un masquage booléen, la fonction de masquage $M$ étant définie, pour deux variables $p$ et $a$ prédéterminées, selon l'une des expressions suivantes :

$$\forall\, x \in GF(2^n), M(x, p, a) = x^{\wedge}(2^{\wedge}p) \oplus a,$$

$$\forall\, x \in GF(2^n), M(x, p, a) = (x \oplus a)^{\wedge}(2^{\wedge}p),$$

l'opérateur $\oplus$ correspondant à une addition de corps fini binaire.

10. Procédé (100) selon la revendication 1 dans lequel la fonction de masquage $M$ est une fonction combinant un masquage carré et un masquage multiplicatif, la fonction de masquage $M$ étant définie, pour une variable $m$ non nulle et une variable $p$ prédéterminées, selon l'une des expressions suivantes :

$$\forall\, x \in GF(2^n), M(x, p, m) = x^{\wedge}(2^{\wedge}p) \otimes m,$$

$$\forall\, x \in GF(2^n), M(x, k, m) = (x \otimes m)^{\wedge}(2^{\wedge}k),$$

m étant une variable aléatoire non nulle, l'opérateur $\oplus$ correspondant à une multiplication de corps fini binaire.

11. Procédé (100) selon la revendication 1 dans lequel la fonction de masquage $M$ est une fonction combinant un masquage carré et un masquage affine, la fonction de masquage $M$ étant définie, pour une variable $m$ non nulle et deux variables $p$ et $a$ prédéterminées, selon l'une des expressions suivantes :

$$\forall\, x \in GF(2^n), M(x, p, m, a) = (x \otimes m \oplus a)^{\wedge}(2^{\wedge}p),$$

$$\forall\, x \in GF(2^n), M(x, p, m, a) = (x \otimes m)^{\wedge}(2^{\wedge}p) \oplus a,$$

$$\forall\, x \in GF(2^n), M(x, p, m, a) = m \otimes x^{\wedge}(2^{\wedge}p) \oplus a,$$

$$\forall\, x \in GF(2^n), M(x, p, m, a) = m \otimes (x^{\wedge}(2^{\wedge}p) \oplus a),$$

$$\forall\, x \in GF(2^n), M(x, p, m, a) = m \otimes (x \oplus a)^{\wedge}(2^{\wedge}p),$$

$$\forall\, x \in GF(2^n), M(x, p, m, a) = (m \otimes (x \oplus a))\wedge(2^p),$$

l'opérateur $\oplus$ correspondant à une addition de corps fini binaire, et l'opérateur $\oplus$ correspondant à une multiplication de corps fini binaire.

12. Produit programme d'ordinateur pour l'exécution d'un algorithme cryptographique, ledit programme comprenant des instructions de code (13) qui, lorsqu'elles sont exécutées par un processeur (11) d'un dispositif électronique (10), configurent ledit processeur (11) pour exécuter un procédé (100) selon l'une des revendications 1 à 11.

13. Dispositif électronique (10) comprenant un processeur (11) et une mémoire (13) mémorisant un produit programme d'ordinateur selon la revendication 12, ledit processeur (11) étant configuré pour exécuter ledit programme d'ordinateur.

14. Procédé (200) pour protéger un dispositif électronique (10) contre des attaques par canal auxiliaire, ledit dispositif électronique (10) comportant un processeur (11) configuré pour exécuter des instructions de code (13) d'un algorithme cryptographique comprenant des opérations sur des éléments appartenant à un corps fini binaire $GF(2^n)$, $n$ étant un entier positif, une partie au moins desdites opérations impliquant au moins une variable secrète s à protéger, le procédé (200) comporte une modification desdites instructions de code (13) par un outil informatique de conversion automatique de code, **caractérisé en ce que** la modification desdites instructions de code (13) comporte :

   - un ajout (201) d'une détermination d'une variable aléatoire k,
   - un ajout (202) d'un calcul d'une représentation masquée M(s, k) de ladite variable secrète s à l'aide d'une fonction de masquage M comportant une élévation à la puissance $2^k$, l'opérateur ^ correspondant à une puissance de corps fini binaire,
   - une transformation (203) de chaque opération impliquant une variable sensible v correspondant à ladite variable secrète s ou à un résultat intermédiaire obtenu à partir de ladite variable secrète s, de sorte que ladite opération soit effectuée à partir d'une représentation masquée M(v, k') de ladite variable sensible v,
   - un ajout (204) d'une détermination d'une variable de sortie r de l'algorithme cryptographique à partir d'un résultat final obtenu sous la forme d'une représentation masquée M(r, k"),
   les variables k' et k" étant déterminées à partir de la variable k.

15. Produit programme d'ordinateur pour un outil informatique de conversion automatique de code d'un algorithme cryptographique, ledit programme comprenant des instructions de code qui, lorsqu'elles sont exécutées par un processeur, configurent ledit processeur pour modifier des instructions de code (13) de l'algorithme cryptographique selon un procédé (200) selon la revendication 14.

10

11

12

13

**Fig. 1**

$e$

$s$

Opérations sans masquage

$r$

**Fig. 2**

**Fig. 3**

200

14

15

Conversion
automatique
de code

# Fig. 4

200

15

$e, s_1, s_2$

201 → k = rand()

202 → M($s_1$,k) = $s_1$^(2^k)

M($s_2$,k) = $s_2$^(2^k)

14

$e, s_1, s_2$

$v_1 = s_1 \oplus e$

203 ⇒ M(e,k) = e^(2^k)

M($v_1$,k) = M($s_1$,k) $\oplus$ M(e,k)

$v_2 = v_1 \oplus s_2$

203 ⇒ M($v_2$,k) = M($v_1$,k) $\oplus$ M($s_2$,k)

203 ⇒ 

$v_3 = v_2$^j

M($v_3$,k) = M($v_2$,k)^j

$v'_3$ = rand

$v''_3 = ( M(v_3,k) \oplus v'_3$^(2^k) )^2^(-k)

203 ⇒ $r'_3 = shiftleft(v'_3, 4)$

$r = shiftleft(v_3, 4)$

$r''_3 = shiftleft(v''_3, 4)$

M(r,k) = $r'_3$^(2^k) $\oplus$ $r''_3$^(2^k)

204 → r =M(r,k)^(2^(-k))

**Fig. 5**

Europäisches
Patentamt

European
Patent Office

Office européen
des brevets

# RAPPORT DE RECHERCHE EUROPEENNE

Numéro de la demande

EP 23 16 7211

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GOUBIN LOUIS ET AL: "Protecting AES with Shamir's Secret Sharing Sc", 28 septembre 2011 (2011-09-28), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 79 – 94, XP047309597, ISBN: 978-3-540-74549-5 | 1,12-15 | INV. H04L9/00 |
| A | * section 2 * | 2-11 | |
| X | PROUFF EMMANUEL ET AL: "Higher-Order Glitches Free Implementation of the AES Using Secure Multi-party Computation Protocols", 28 septembre 2011 (2011-09-28), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 63 – 78, XP047309596, ISBN: 978-3-540-74549-5 | 1,12-15 | |
| A | * section 3.1 * | 2-11 | DOMAINES TECHNIQUES RECHERCHES (IPC) |
| A | BELLEVILLE NICOLAS ET AL: "Maskara: Compilation of a Masking Countermeasure With Optimized Polynomial Interpolation", IEEE TRANSACTIONS ON COMPUTER-AIDED DESIGN OF INTEGRATED CIRCUITS AND SYSTEMS, IEEE, USA, vol. 39, no. 11, 30 juillet 2020 (2020-07-30), pages 3774-3786, XP011818290, ISSN: 0278-0070, DOI: 10.1109/TCAD.2020.3012237 [extrait le 2020-10-28] * section IV * | 1-15 | H04L |

Le présent rapport a été établi pour toutes les revendications

| Lieu de la recherche | Date d'achèvement de la recherche | Examinateur |
|---|---|---|
| Munich | 14 août 2023 | Yamajako-Anzala, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

## RÉFÉRENCES CITÉES DANS LA DESCRIPTION

**Documents brevets cités dans la description**

- EP 1068695 B1
- EP 2302552 B1
- EP 3593483 B1

**Littérature non-brevet citée dans la description**

- **L. GENELLE.** *Secure Multiplicative Masking of Power Functions*
- **G. FUMAROLLI.** *Affine Masking against Higher-Order Side Channel Analysis*
- **J.S CORON.** *Fast Evaluation of Polynomials over Binary Finite Fields and Application to Side-Channel Countermeasures*